# FASCICULE DE BREVET EUROPEEN

(11) **EP 3 358 308 B1**
(45) Date de publication et mention de la délivrance du brevet: **28.08.2019**
(21) Numéro de dépôt: 18154002.2
(22) Date de dépôt: 29.01.2018
(51) Int. Cl.: G01D 5/12, G01D 5/22, G01D 11/30, G01B 7/24, B64C 25/00, B64C 25/18, B64C 25/40, F15B 15/28

(54) **CIBLE DE MESURE MAGNETIQUE**
ZIEL MIT MAGNETISCHER MESSUNG
A MAGNETIC MEASUREMENT TARGET

(30) Priorité: 03.02.2017 FR 1750948
(43) Date de publication de la demande: 08.08.2018
(73) Titulaire: Safran Landing Systems, 78140 Vélizy-Villacoublay (FR)
(72) Inventeur: HENRION, Philippe, 78140 VELIZY-VILLACOUBLAY (FR); COLLET, Olivier, 78140 VELIZY-VILLACOUBLAY (FR)
(74) Mandataire: Lavaud, Thomas

(56) Documents cités:
- EP-A1- 1 950 428
- EP-A1- 2 818 405
- EP-A1- 2 832 639
- WO-A1-2006/024146
- WO-A1-2016/061323

## Description

L'invention concerne le domaine des cibles de mesure magnétique adaptées à être positionnées à l'intérieur d'un essieu de véhicule.

### ARRIERE PLAN DE L'INVENTION

Plusieurs méthodes ont été envisagées pour déterminer de manière fiable si, au moment d'un atterrissage, des roues portées par un atterrisseur d'aéronef ont ou non touché le sol.

On a notamment envisagé de mesurer la pression d'un amortisseur d'une jambe de l'atterrisseur, ou bien de mesurer un déplacement d'une tige coulissante de la jambe de l'atterrisseur. Cependant, l'amortisseur de la jambe de l'atterrisseur présente un seuil de déplacement et un seuil d'enfoncement qui rendent ces solutions inefficaces et inappropriées.

On a aussi envisagé d'intégrer, à l'intérieur d'un essieu de l'atterrisseur portant les roues, des capteurs de déplacement, et notamment des capteurs magnétiques de déplacement de type LVDT (pour *Linear Variable Differential Transformer,* en anglais). Les capteurs LVDT sont positionnés sur un diamètre interne de l'essieu.

Cependant, l'espace disponible à l'intérieur de l'essieu est très réduit, et il convient alors d'utiliser des capteurs LVDT de très faible dimension, qui sont fragiles, peu précis et coûteux. Par ailleurs, le montage et le démontage des capteurs LVDT sont complexes à réaliser du fait, une fois encore, de l'exiguïté de l'essieu. Enfin, l'espace disponible réduit oblige à positionner les capteurs LVDT sur un même support. Un grippage de l'un des capteurs LVDT entraîne ainsi la perte des informations produites par les autres capteurs LVDT.

Le document WO 2006/024146 A1 décrit une cible de mesure adaptée à être positionnée à l'intérieur d'un essieu de véhicule et à coopérer avec au moins deux capteurs de déplacement pour mesurer une déformation de l'essieu.

### OBJET DE L'INVENTION

L'invention a pour objet de pallier les inconvénients des méthodes évoquées plus tôt.

### RESUME DE L'INVENTION

En vue de la réalisation de ce but, on propose une cible de mesure magnétique adaptée à être positionnée à l'intérieur d'un essieu de véhicule et à coopérer avec au moins deux capteurs magnétiques de déplacement pour mesurer une déformation de l'essieu, la cible de mesure magnétique comportant un corps qui comprend une extrémité de fixation destinée à être fixée à une extrémité de l'essieu et une partie courante dans laquelle est pratiquée selon une direction axiale une fente qui sépare entre elles deux portions longitudinales de corps, chaque portion longitudinale de corps présentant une surface cible dont un déplacement peut être mesuré par un capteur magnétique de déplacement.

Le positionnement de la cible de mesure magnétique à l'intérieur de l'essieu permet d'augmenter l'espace disponible pour l'intégration des capteurs magnétiques de déplacement qui coopèrent avec la cible de mesure magnétique.

La cible de mesure magnétique présente deux surfaces cibles indépendantes. Chaque capteur magnétique de déplacement coopère avec l'une des deux surfaces cibles indépendantes, de sorte que le grippage ou tout autre dysfonctionnement de l'un des capteurs magnétiques de déplacement ne provoque pas la perte totale des mesures. On augmente ainsi nettement la fiabilité d'un dispositif de mesure magnétique qui, outre la cible de mesure magnétique selon l'invention, comporte aussi les capteurs magnétiques de déplacement.

On propose aussi un dispositif de mesure magnétique comportant une cible de mesure magnétique telle que précédemment décrite et deux capteurs magnétiques de déplacement.

L'invention sera mieux comprise à la lumière de la description qui suit d'un mode de mise en oeuvre particulier non limitatif de l'invention.

### BREVE DESCRIPTION DES DESSINS

Il sera fait référence aux dessins annexés, parmi lesquels :
- la figure 1 représente une jambe d'un atterrisseur auxiliaire sur lequel est mis en oeuvre l'invention ;
- la figure 2 représente une cible de mesure magnétique selon l'invention et des capteurs LVDT coopérant avec la cible de mesure magnétique ;
- la figure 3 représente deux cibles de mesure magnétique selon l'invention et des capteurs LVDT intégrés dans un essieu de l'atterrisseur auxiliaire ;
- la figure 4 est un agrandissement de la figure 3 en bout d'essieu.

### DESCRIPTION DETAILLEE DE L'INVENTION

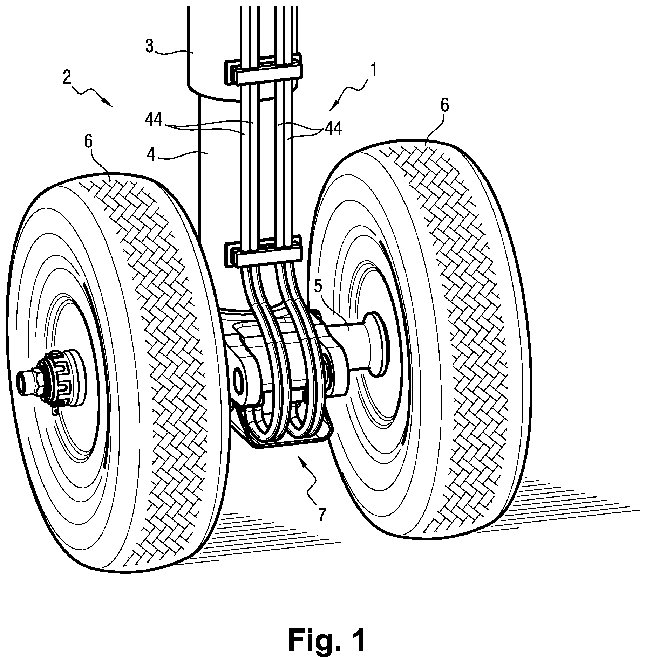

En référence à la figure 1, l'invention est ici mise en oeuvre sur un atterrisseur d'aéronef 1. L'atterrisseur d'aéronef 1 est un atterrisseur auxiliaire qui comporte une jambe 2 comprenant un caisson 3 dans lequel coulisse une tige coulissante 4.

Un essieu 5 portant deux roues 6 est positionné au bas de la tige coulissante 4.

Deux cibles de mesure magnétique selon l'invention et des capteurs magnétiques de déplacement sont utilisés ici pour détecter une déformation de l'essieu 5 de manière à déterminer de manière fiable si, au moment d'un atterrissage, les roues 6 ont ou non touché le sol.

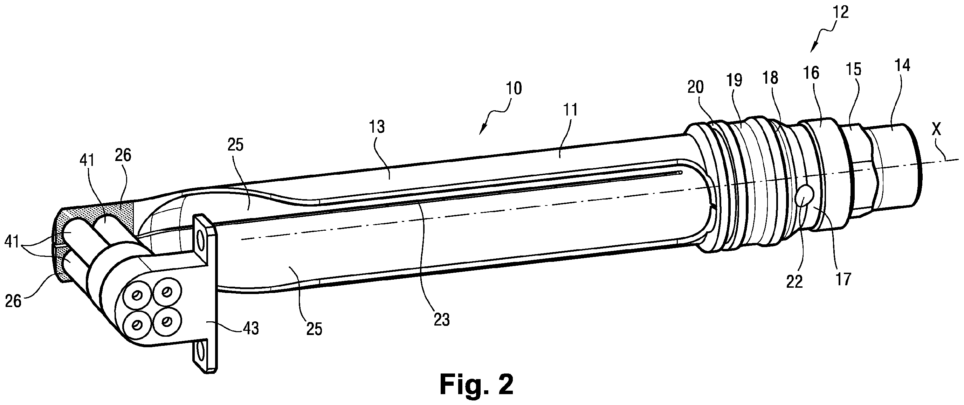

En référence à la figure 2, une cible de mesure magnétique selon l'invention 10 comporte un corps 11 qui comprend une extrémité de fixation 12 et une partie courante 13. L'extrémité de fixation 12 présente successivement et selon la longueur du corps 11 une portion de surface extérieure cylindrique 14, une portion de surface extérieure hexagonale 15, une portion filetée 16, une première gorge 17, un chanfrein externe 18, une deuxième gorge 19 et une troisième gorge 20 de section carrée. Un joint d'étanchéité, non représenté sur les figures, est positionné dans la troisième gorge 20. Un orifice traversant 22 est situé dans la première gorge 17.

La portion courante 13 du corps 11 présente une forme cylindrique d'axe X évidée partiellement.

Une fente 23 est pratiquée dans la portion courante 13 du corps 11. La fente 23 s'étend selon une direction axiale, parallèlement à l'axe X, sur presque toute la longueur de la portion courante 13.

La fente 23 sépare entre elles deux portions longitudinales de corps 25. Chaque portion longitudinale de corps 25 présente à une extrémité libre une surface cible plane 26, qui s'étend sur une surface interne de la portion longitudinale de corps 25, c'est à dire au regard de l'axe X.

Les deux surfaces cibles 26 sont ainsi séparées uniquement par la fente 23. La forme cylindrique évidée partiellement de la portion courante 13 est telle qu'aucune matière (du corps 11) ne s'étend au regard des surfaces cibles 26.

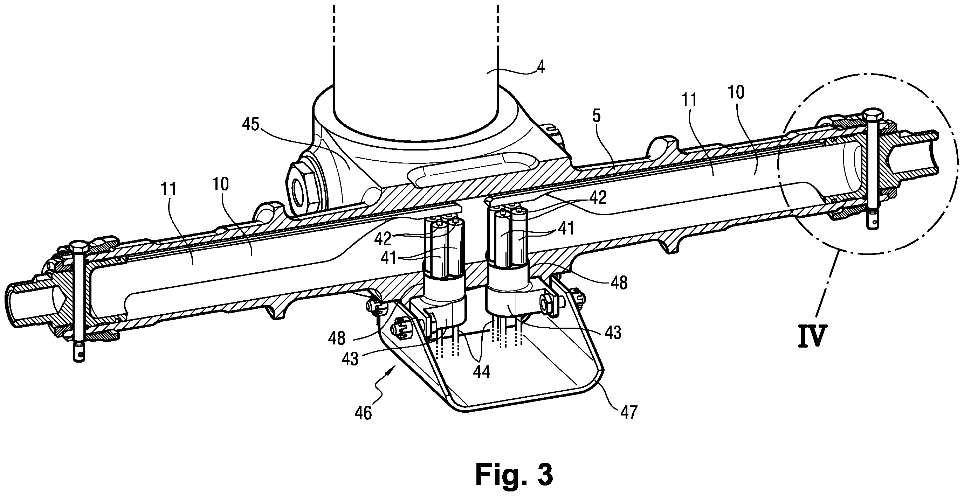

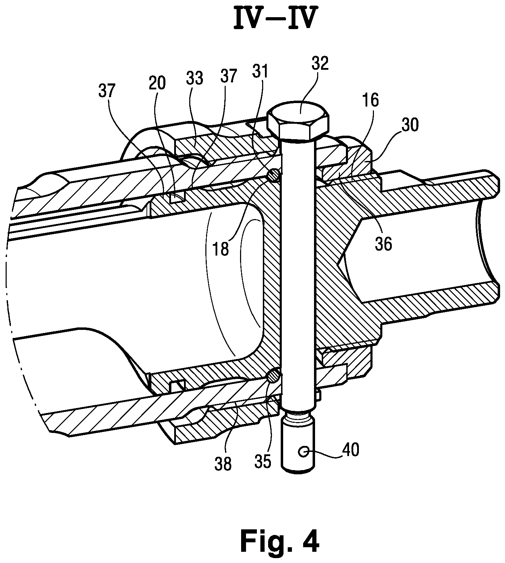

En référence aux figures 3 et 4, deux cibles de mesure magnétique 10 sont intégrées dans l'essieu 5, chaque cible de mesure magnétique 10 étant positionnée d'un côté de l'essieu 5.

Le montage de chaque cible de mesure magnétique 10 requiert des moyens de fixation qui comprennent un écrou 30 et un jonc 31.

Le corps 11 de la cible de mesure 10 est inséré à l'intérieur de l'essieu 5, légèrement au-delà de sa position finale. Le jonc 31 est alors positionné contre le chanfrein externe 18. Puis, le corps 11 est reculé vers l'extérieur de l'essieu 5 pour être positionné dans sa position finale.

Le jonc 31 se positionne alors partiellement dans une gorge 35 pratiquée à cet effet sur une surface interne de l'essieu 5. Lorsque le corps 11 recule vers l'extérieur de l'essieu 5, le chanfrein externe 18 appuie sur le jonc 31 et vient augmenter le diamètre du jonc 31 qui s'enfonce encore dans la gorge 35.

L'écrou 30 est alors vissé sur la portion filetée 16 du corps 11. Une portion 36 de l'écrou 30 est insérée à l'intérieur de l'essieu 5. Plus l'écrou 30 est vissé, plus le jonc 31 s'enfonce dans la gorge 35.

Le jonc 31 et la gorge 35 forment une butée axiale pour le corps 11 de la cible de mesure magnétique 10.

Le diamètre extérieur de l'écrou 30, au niveau de la portion 36, est très proche du diamètre interne de l'essieu 5 à son extrémité, de sorte qu'un premier centrage court de la cible de mesure magnétique 10 à l'intérieur de l'essieu 5 est obtenu via l'écrou 30, le corps 11 et l'essieu 5.

Le joint d'étanchéité et les surfaces de corps 37 situées de part et d'autre de la troisième gorge 20 présentent aussi un diamètre extérieur très proche du diamètre interne de l'essieu 5 à cet endroit, de sorte qu'un deuxième centrage court de la cible de mesure magnétique 10 à l'intérieur de l'essieu 5 est obtenu via le joint d'étanchéité, les surfaces de corps 37 et l'essieu 5.

Un écrou de roue 33 est vissé sur une portion filetée 38 d'une surface externe de l'essieu 5. Un boulon 32, qui arrête en rotation l'écrou de roue 33, est insérée au travers d'un orifice traversant l'écrou de roue 33, au travers d'un orifice traversant l'essieu 5, et au travers de l'orifice traversant 22 situé dans la première gorge 17 du corps 11.

Le boulon 32 présente au niveau de l'une de ses extrémités un orifice traversant radial 40 au travers duquel est susceptible de cheminer fil à freiner.

Le fil à freiner peut être remplacé par une goupille fendue pour le freinage d'un écrou (non représenté sur les figures).

L'écrou 30, le jonc 31, la gorge 35 pratiquée sur la surface interne de l'essieu 5, ainsi que l'extrémité de fixation 12 du corps 11, forment donc des moyens de fixation sans jeu du corps 11 et donc de la cible de mesure magnétique 10 à l'essieu 5.

Ainsi, pour chaque cible de mesure magnétique 10, la liaison sans jeu entre l'essieu 5 et la cible de mesure magnétique 10, résultant de ces moyens de fixation sans jeu, permet de produire un déplacement des surfaces cibles 26 représentatif d'un mouvement de l'extrémité de l'essieu 5 à laquelle est fixé le corps 11 de la cible de mesure magnétique 10. En particulier, une flexion de l'essieu 5 entraîne une rotation des cibles de mesure magnétiques 10 et donc des surfaces cibles 26.

Le déplacement des surfaces cibles 26 est amplifié par rapport au mouvement de l'extrémité de l'essieu 5 à laquelle est fixé le corps 11, du fait de la distance entre les surfaces cibles 26 et l'extrémité de l'essieu (et donc du fait de la longueur de la partie courante 13 du corps 11).

Chaque cible de mesure magnétique 10 est incluse dans un dispositif de mesure magnétique qui, outre la cible de mesure magnétique 10, comprend au moins deux capteurs magnétiques de déplacement, en l'occurrence un ensemble de quatre capteurs magnétiques de déplacement.

Les capteurs magnétiques de déplacement utilisés ici sont des capteurs LVDT 41.

Dans chaque dispositif de mesure magnétique, la cible de mesure magnétique est donc associée à un ensemble de quatre capteurs LVDT 41.

Dans chaque dispositif de mesure magnétique, les quatre capteurs LVDT 41 comprennent deux capteurs LVDT 41 destinés à coopérer avec l'une des deux surfaces cibles 26, et deux capteurs LVDT 41 destinés à coopérer avec l'autre des deux surfaces cibles 26.

Chaque capteur LVDT 41 comporte une extrémité de mesure comprenant un palpeur 42 qui est en contact avec l'une des surfaces cibles 26 lorsque la cible de mesure magnétique 10 et donc ladite surface cible 26 est entraînée en rotation. On détecte ainsi une flexion de l'essieu 5 qui résulte du contact des roues 6 avec le sol.

Chaque ensemble de quatre capteurs LVDT 41 associé à une cible de mesure magnétique 10 (deux capteurs LVDT 41 par surface cible 26 de la cible de mesure magnétique 10) est monté sur un support de capteurs 43. Des fils 44, reliés aux capteurs LVDT 41 et permettant de transmettre à un calculateur ou à un concentrateur de données les mesures produites par les capteurs LVDT 41, cheminent depuis chaque support de capteur 43.

L'essieu 5 comprend un pot d'essieu, qui est une partie centrale 45 de l'essieu 5 fixée à la tige coulissante 4 au niveau d'une extrémité basse 46 de la tige coulissante 4. La partie centrale 45 de l'essieu 5 comprend deux ouvertures inférieures 48 permettant d'accéder à l'intérieur de l'essieu 5.

Chaque support de capteurs 43 est fixé à la partie centrale 45 et s'étend au travers de l'une des ouvertures inférieures 48. Les capteurs LVDT sont ainsi introduits à l'intérieur de la partie centrale 45 de l'essieu 5. Les capteurs LVDT 41 s'étendent donc à l'intérieur de la partie centrale 45 de l'essieu 5 et sont positionnés de manière à ce que les extrémités de mesure des capteurs LVDT 41 soient situées à proximité immédiate voire au contact des surfaces cibles 26, pour mesurer un déplacement des surfaces cibles 26.

Un capot 47 protège les capteurs LVDT 41.

Cette configuration permet de monter, de démonter et de remplacer très facilement les capteurs LVDT 41, puisqu'il suffit, pour accéder aux capteurs LVDT 41, de démonter le capot 47. Il n'est donc pas nécessaire d'accéder à l'intérieur de l'essieu 5. On facilite ainsi les opérations de maintenance mise en oeuvre sur les dispositifs de mesure magnétique (comprenant chacun une cible de mesure magnétique 10 et un ensemble de quatre capteurs LVDT 41).

Cette configuration permet aussi de traiter les cibles de mesures magnétiques 10 et les capteurs LVDT 41 (ou, plus précisément ici, les ensembles de quatre capteurs LVDT 41) comme des LRU (pour *Line-Replacable Unit*), c'est à dire comme des équipements indépendants pouvant être surveillés, remplacés, stockés, individuellement. On facilite une fois encore les opérations de maintenance mises en oeuvre sur les dispositifs de mesure magnétique.

Bien entendu, l'invention n'est pas limitée au mode de réalisation décrit mais englobe toute variante entrant dans le champ de l'invention telle que définie par les revendications.

L'invention s'applique bien sûr à tout type d'atterrisseur (auxiliaire, principal), et notamment aux atterrisseurs portant un nombre de roues différents de deux (par exemple, à un atterrisseur portant une seule roue) .

Bien que, dans l'application décrite ici, les cibles de mesure magnétique sont insérées dans un essieu d'atterrisseur d'aéronef, une cible de mesure magnétique peut parfaitement être positionnée dans un essieu d'un autre type de véhicule, par exemple dans un essieu d'automobile.

On a décrit ici l'utilisation de quatre capteurs magnétiques de déplacement par cible de mesure magnétique. Il est possible d'utiliser un nombre de capteurs magnétiques de déplacement différent, et, notamment, un seul capteur magnétique de déplacement par surface cible.

Les capteurs magnétiques de déplacement ne sont pas nécessairement des capteurs LVDT. Tout type de capteur peut être utilisé (par exemple des capteurs à effet Hall).

Bien que l'on ait indiqué ici que les capteurs LVDT détectent « uniquement » si les roues ont touché le sol ou non, les capteurs magnétiques de déplacement pourraient bien sûr aussi mesurer de manière précise l'amplitude du déplacement subi par les surfaces cibles et par l'essieu.

On a indiqué que le dispositif de mesure magnétique comprenant la cible de mesure magnétique et les capteurs LVDT est utilisé pour détecter si les roues ont touché le sol ou non. Le dispositif de mesure magnétique pourrait aussi être utilisé pour mettre en oeuvre des fonctions différentes, et par exemple une fonction de *health monitoring* (aussi appelée fonction de maintenance conditionnelle ou de maintenance prédictive), ou une fonction de *weight and balance* (évaluation de la masse et du centrage de l'aéronef), ou bien une fonction de mesure d'une force de freinage via une mesure de flexion ou de torsion de l'essieu.

## Revendications

1. Cible de mesure magnétique (10) adaptée à être positionnée à l'intérieur d'un essieu (5) de véhicule et à coopérer avec au moins deux capteurs magnétiques de déplacement (41) pour mesurer une déformation de l'essieu, la cible de mesure magnétique comportant un corps (11) qui comprend une extrémité de fixation (12) destinée à être fixée à une extrémité de l'essieu et une partie courante (13) dans laquelle est pratiquée selon une direction axiale une fente (23) qui sépare entre elles deux portions longitudinales de corps (25), chaque portion longitudinale de corps (25) présentant une surface cible (26) dont un déplacement peut être mesuré par un capteur magnétique de déplacement (41) .

2. Cible de mesure selon la revendication 1, dans laquelle le corps (11) comporte une partie courante (13) qui présente une forme cylindrique évidée partiellement.

3. Cible de mesure selon la revendication 1, dans laquelle chaque surface cible (26) s'étend à l'intérieur d'une portion longitudinale de corps (25) et à une extrémité libre d'une portion longitudinale de corps (25).

4. Dispositif de mesure magnétique comportant une cible de mesure magnétique (10) selon la revendication 1 et deux capteurs magnétiques de déplacement (41) qui mesurent chacun un déplacement de l'une des deux surfaces cibles (26).

5. Dispositif de mesure magnétique selon la revendication 4, dans laquelle les deux capteurs magnétiques de déplacement (41) comprennent un capteur de type LVDT comportant un palpeur (42) susceptible d'être en contact avec une surface cible (26).

## Patentansprüche

1. Magnetisches Messziel (10), das dazu geeignet ist, im Inneren einer Fahrzeugradachse (5) positioniert zu werden und mit mindestens zwei magnetischen Wegsensoren (41) zusammenzuwirken, um eine Verformung der Radachse zu messen, wobei das magnetische Messziel einen Körper (11) umfasst, der ein Befestigungsende (12) umfasst, das dazu bestimmt ist, an einem Ende der Radachse befestigt zu werden, sowie einen laufenden Abschnitt (13), in dem in einer axialen Richtung ein Schlitz (23) ausgebildet ist, der zwei Längsabschnitte (25) des Körpers voneinander trennt, wobei jeder Längsabschnitt (25) des Körpers eine Zieloberfläche (26) umfasst, deren Verschiebung von einem magnetischen Wegsensor (41) gemessen werden kann.

2. Messziel nach Anspruch 1, bei dem der Körper (11) einen laufenden Abschnitt (13) umfasst, der eine teilweise ausgesparte zylindrische Form umfasst.

3. Messziel nach Anspruch 1, bei dem sich jede Zieloberfläche (26) im Inneren eines Längsabschnitts (25) des Körpers und an einem freien Ende eines Längsabschnittes (25) des Körpers erstreckt.

4. Magnetische Messvorrichtung, umfassend ein magnetisches Messziel (10) nach Anspruch 1 und zwei magnetische Wegsensoren (41), die jeweils eine Verschiebung einer der beiden Zieloberflächen (26) misst.

5. Magnetische Messvorrichtung nach Anspruch 4, bei der die beiden magnetischen Wegsensoren (41) einen Sensor vom Typ LVDT umfassen, der einen Taster (42) umfasst, der geeignet ist, mit einer Zieloberfläche (26) in Kontakt zu sein.

## Claims

1. A magnetic measurement target (10) adapted to be positioned inside a vehicle axle (5) and to co-operate with at least two magnetic movement sensors (41) in order to measure deformation of the axle, the magnetic measurement target comprising a body (11) that includes a fastener end (12) for fastening to one end of the axle and a main portion (13) having a slot (23) formed in an axial direction therein to separate two longitudinal portions of the body (25), each longitudinal portion of the body (25) presenting a target surface (26) for which movement can be measured by a magnetic movement sensor (41) .

2. A measurement target according to claim 1, wherein the body (11) includes a main portion (13) that is in the form of a partially hollow cylinder.

3. A measurement target according to claim 1, wherein each target surface (26) extends inside a longitudinal body portion (25) and at a free end of a longitudinal body portion (25).

4. A magnetic measurement device comprising a magnetic measurement target (10) according to claim 1 together with two magnetic movement sensors (41), each measuring movement of a respective one of the two target surfaces (26) .

5. A magnetic measurement device according to claim 4, wherein each of the two magnetic movement sensors (41) comprises an LVDT type sensor having a feeler (42) suitable for coming into contact with a respective target surface (26).
